# EUROPEAN PATENT SPECIFICATION

(11) **EP 3 548 221 B1**
(45) Date of publication and mention of the grant of the patent: **26.07.2023**
(21) Application number: 17812075.4
(22) Date of filing: 24.11.2017
(51) Int. Cl.: B23Q 1/28, B23Q 16/10, F16D 63/00, B23Q 11/00

(54) **A SYSTEM FOR MOVING A TOOL IN A MACHINE TOOL**
SYSTEM ZUM BEWEGEN EINES WERKZEUGS AN EINER WERKZEUGMASCHINE
SYSTÈME DESTINÉ À DÉPLACER UN OUTIL DANS UNE MACHINE-OUTIL

(30) Priority: 01.12.2016 IT 201600122301
(43) Date of publication of application: 09.10.2019
(73) Proprietor: Mandelli S.R.L., 29122 Piacenza (IT)
(72) Inventor: GELLINI, Saverio, 48018 Faenza (Ravenna) (IT)
(74) Representative: Zermani Biondi Orsi, Umberto
(86) International application number: PCT/IB2017/057381
(87) International publication number: WO 2018/100474

(56) References cited:
- EP-A1- 2 204 258
- DE-A1- 3 742 965
- DE-A1- 19 738 987
- JP-A- 2012 051 083
- US-A1- 2012 011 964

## Description

### Technical field

This invention relates to a system for moving a tool in a machine tool, preferably for a tilting head machining centre.

This invention is applied in particular in the sector of mechatronics, in particular in the production of machining centres for the aeronautics and aerospace sectors.

### Background art

In the prior art, the machining centres are divided by type and number of "operating" axes; more specifically, each machining centre has a plurality of operating axes about or along which the tool is moved for making suitable machining operations on a workpiece.

Typically, these machines have 5 axes or more and comprise linear movement systems, wherein a carriage equipped with runners is moved along suitable linear guides, or rotational movement systems.

For example, these machining centres are equipped with a tool-holder spindle rotatable about its own central axis and at the same time tilting, that is, which can be oriented, by rotation about an axis at right angles to the central axis.

Currently, both the linear and rotational axes are moved by suitable drives, electrical or hydraulic, until the tool reaches a working position.

With reference to the spindle-mounting head, it is rotatably moved about a relative axis of movement (in the jargon, axis A) until reaching the position and then stopped in this position by means of a locking system, typically of the hydraulic type.

More specifically, the head is associated with a brake disc acted upon by a gripper, which is commonly controlled by high levels of pressure (approximately 30 bar) in order to exclude any possibility of movement of the head, which is a necessary condition to guarantee the required machining precision.

Similar movement and locking systems are used on the linear axes, where upon reaching a predetermined height/coordinate a hydraulic brake is operated in order to fix the position between the runner and guide.

It should be noted that, so as to maximise the locking effect, the prior art brakes are equipped with a contact element made of steel, typically spring steel, which, once in contact with the contact element (disc or guide) generates a friction such as to guarantee, together with the pressure exerted, an absence of relative movement.

Disadvantageously, however, this solution is optimal when the movement of the head or carriage is performed for positioning purposes, therefore "free", but may not be sufficient when the movement about or along the axis occurs during the machining.

In effect, it is not uncommon that during machining vibrations may occur between the tool and the machining surface, which translate both into stress for the mounting structure of the tool (i.e. the spindle-mounting head and frame) and a reduced machining precision.

There are prior art systems of various types to combat this phenomenon, mainly linked to a modulation of the feed speed of the tool relative to the workpiece to be machined or the depth of pass; however, these are often linked to the preliminary study of theoretical/predictive models of the vibrating motion and may not be sufficiently reactive in the case of small movements.

An example of prior art machine according to the preamble of claim 1 is known from document US2012011964.

### Disclosure of the invention

In light of this, the aim of this invention is to provide a movement system for a tool in a machine tool which can overcome the above-mentioned drawbacks of the prior art.

More specifically, the aim of this invention is to provide a system for moving a tool in a machine tool which has high performance levels and, at the same time, is easy to make.

More specifically, the aim of this invention is to provide a system for moving a tool in a machine tool which is able to dampen the occurrence of vibrating motions during the movement about an axis of rotation, preferably about the axis A.

These aims are achieved by a system for moving a tool in a machine tool comprising the features contained in one or more of the subsequent claims, in particular equipped with a frame, a member movable relative to the frame along or about an axis of movement, a unit for transmission of the rotating motion operatively interposed between the frame and the movable member, a hydraulic stop unit operatively interposed between the frame and the movable member and a control unit associated with the transmission unit and with the stop unit for controlling them.

The stop unit comprises at least a first element rigidly connected to the frame, at least a second element rigidly connected to the movable member and a hydraulic actuation circuit associated with the first and/or the second element and configured for moving at least partly the first and/or the second element towards and/or away from each other according to a command issued by the control unit.

According to an aspect of the invention, the control unit is configured for selectively controlling the hydraulic actuation circuit at a first pressure, in which it generates a first contact force between the first and the second element on the disc, or at a second pressure, in which it generates a second contact force between the first and the second element, greater than the first pressure, where the second pressure is sufficient to lock the disc relative to the gripper.

The first pressure is such that it allows a sliding between the first element and the second element, that is to say, such as to allow a "controlled" movement of the movable member relative to the frame along or about the axis of movement.

Preferably, the first and/or the second element of the stop unit have at least one of mutual contact surface coated with a layer of material having a low friction coefficient so as to favour the mutual sliding in the first configuration.

Advantageously, in this way it is possible to obtain a movement system which is able to reduce the vibrations occurring during the machining in a very simple and inexpensive way, without radically changing the existing structure of the head.

With a simple control under pressure, which is higher for the locking and lower for the damping, and without substantial structural modifications with respect to the existing machines, the system guarantees both the possibility of stopping and reducing vibrations.

This is particularly advantageous also with regard to retro-fitting, that is to say, the maintenance or updating of existing machines.

It should be noted that this solution is applicable both to linear and rotational axes.

The system may be integrated in a rotary axis of the machine tool, in which:
- the movable member is a member rotatable relative to the frame;
- the first and the second element of the stop unit correspond, respectively, to a rotating disc with the movable member and a gripper. For example, according to one aspect of this invention, the system is integrated in a the spindle-mounting head.

In this embodiment:
the movable member is a spindle rotatable about an axis of oscillation, corresponding to the axis of movement;
the first and the second element of the stop unit correspond, respectively, to a rotating disc with spindle and a gripper.

Alternatively, according to another aspect of this invention, the system is applicable to a linear movement unit.

In this case, the movable member is defined by a carriage, whilst the first and the second element of the stop unit correspond, respectively, to a runner and a linear guide extending along the axis of movement.

### Brief description of drawings

These and other features and the relative advantages will become particularly clear from the following non-limiting description of a preferred embodiment of a spindle-mounting head for a machine tool as illustrated in the accompanying drawings, in which:
Figure 1 shows a perspective view of a first embodiment of a movement system for a tool in a machine tool according to this invention;
Figures 2 and 3 show a transversal cross section of details of the system of Figure 1;
Figure 4 shows a schematic view of a second embodiment of a movement system for a tool in a machine tool according to this invention.

### Detailed description of preferred embodiments of the invention

With reference to the accompanying drawings, the numeral 1 denotes a system for moving a tool in a machine tool according to the invention.

The machining centre, or machine tool, comprises a part-holder table, generally rotatable about its own axis and/or movable along one or more directions of movements.

The table is associated with a frame from which extends a supporting structure for the tool; the structure is divided into a plurality of carriages mobile along respective directions of movements and comprises a spindle-mounting head 1a, in which the tool is housed.

The system 1 comprises a frame 102 and a member 103 movable relative to the frame 102.

The movable member 103 is translatable along or rotatable about an axis of movement "M".

The axis "M" may be, as described below, an axis of oscillation "A" or a sliding axis "C".

Between the movable member 103 and the frame 102 there is also a unit 104 for transmission of the motion.

The transmission unit 104 is configured to vary the orientation or the position of the movable member 103 in space as a function of the type of machining to be performed on the workpiece.

The transmission unit 104 is not discussed in detail, because it is of a per se known type and not a central part of this invention.

The system also comprises a hydraulic stop unit 105 operatively interposed between the frame 102 and the movable member 103.

There is also a control unit 12 associated with the transmission unit 104 and with the stop unit 105 for controlling them as a function of a command from the operator or of a numerical control program of the representation of the machining to be performed.

The stop unit 105 comprises at least a first element 106 rigidly connected to the frame 102 and at least a second element 107 rigidly connected to the movable member 103.

The first element 106 and the second element 107 are movable towards and away from each other between a distal position, wherein they are not in contact, and at least one proximal contact position, wherein a contact force is applied between the two elements.

It should be noted that, according to the embodiment, the first element 106, the second element 107 or both may be moved.

To obtain the movement, the system 1 preferably comprises a hydraulic actuating circuit 13 associated with the first element 106 and/or with the second element 107 and configured to move at least partly the first element 106 and/or the second element 107 towards and/or away from each other according to a command issued by the control unit 12.

It should be noted that, preferably, at least one of the elements 106, 107 of the stop unit 105 has at least one surface of contact with the other element provided with a coating 17 of material having a low coefficient of friction. Advantageously, the presence of the coating 17 facilitates the sliding movement between the first element 106 and the second element 107, at least in the first configuration, thus preventing direct metal-metal friction which would result in a rapid wear of the stop unit.

Preferably, the coating 17 is positioned on both the elements 106, 107, more preferably on all the contact surfaces.

Preferably, the coating 17 has a coefficient of friction relative to the non-lubricated steel of less than 0.6, preferably equal to approximately 0.4.

According to the preferred embodiment, the coating 17 comprises a plurality of alternating layers of chromium nitride (CrN) and niobium nitride (NbN); the number of layers is preferably between 1,000 and 1,400, preferably approximately 1,200.

The coating 17 has a thickness of less than 10µm, more preferably less than or equal to 6µm.

Moreover, in terms of the hardness, the coating 17 preferably has a value of between 2,000 and 3,000 HV, preferably between 2,400 and 2,700 HV.

According to an aspect of the invention, the control unit 12 is configured for selectively controlling the hydraulic actuation circuit 13 at a first pressure P1, in which it generates a first contact force between the first 106 and the second element 107, or at a second pressure P2, in which it generates a second contact force between the first 106 and the second element 107, greater than the first pressure.

It should be noted that the second pressure P2 is sufficient to lock the relative movement between the first element 106 and the second element 107.

The first pressure is, on the other hand, such that it allows a sliding between the first element 106 and the second element 107, that is to say, such as to allow a "controlled" movement of the movable member 103 relative to the frame 102 along or about the axis of movement "M".

The first pressure P1 (or damping pressure) is less than the second pressure P2 since it must allow the sliding between the first element 106 and the second element 107.

On the other hand, the second pressure P2 (or stopping pressure) must be which high enough to block the relative movement between the first element 106 and the second element 107 of the stop unit 105.

In this regard, preferably, the second pressure P2 is at least triple the first pressure P1.

To allow the control described above, the hydraulic circuit 13 comprises at least one pump 13b put in fluid communication with the first 106 or the second movable element with at least one control valve 13a.

More specifically, the hydraulic circuit 13 comprises a delivery conduit associated with the pump 13b and along which is set up the control valve 13a.

The valve 13a can preferably be operated in at least two positions, one corresponding to the first configuration and one corresponding to the second configuration.

More preferably, the valve 13a can be operated in at least a third position, corresponding to a passive configuration of the stop unit 105, wherein the first element 106 and the second element 107 are free to move mutually according to the movement imparted by the transmission unit 104.

In the embodiment illustrated, the valve 13a is a three-position 4-way valve.

Alternatively, as described in more detail below, the valve could be a proportional valve/solenoid valve.

With reference to the embodiment illustrated, the valve 13a may be controlled in a first, a second and a third position.

For this reason, the control unit 12 is configured to send to the valve 13a a signal to position it in the first, in the second or in the third position as a function of a command issued.

This command may be issued "manually" by an operator on the machine or by the numerical control as a function of the type of machining to be performed.

More precisely, the control unit 12 is configured for sending to the valve 13a:
a signal representing the second position when the numerical control or
the operator wants to stop the movement of the movable member 103 relative to the frame 102;
a signal representing the third position when the numerical control or the operator wants to activate the movement of the movable member 103 relative to the frame 102.

A signal representing the first position is sent to the valve 13a, from the control or by the operator, when the movement of the movable member 103 about or along the axis "M" is performed inside a machining which causes a vibrating motion (that is to say, a vibration) in the tool.

In some embodiments, this control is preset (or imparted manually by the operator) as a function of the type of machining to be performed.

According to the invention, the system comprises at least one vibration sensor 16 designed to detect any vibrating motions of the tool and designed to send to the control unit 12 a signal representing the vibrating motions.

For this reason, the control unit 12 is associated with the sensor 16 for receiving the above-mentioned signal and is configured for controlling the hydraulic actuation circuit (13) in such a way as to bring it to the first pressure (defining the first configuration) upon receiving it.

More precisely, the control unit 12 is configured for sending to the valve 13a a signal representing the first position.

Preferably, the sensor 16 is defined by an accelerometer used more preferably in combination with a microphone (even more preferably a hydrophone).

The sensor 16 is preferably configured to detect not only the presence but also the amount of the vibrating motion.

In light of this, according to an improved embodiment, the signal representing the vibrating motion measured by the sensor 16 is modulated according to the extent of the vibration (preferably providing information regarding frequency and amplitude).

In that case, the control unit 12 is configured to vary the value of the first pressure P1, which at this point is no longer predetermined, as a function of a value of the signal in order to optimise the damping of the vibrating motion.

It should be noted that according to this embodiment, the valve 13a is a proportional valve, which can be controlled by the control unit 12 in a plurality of positions as a function of the level of vibration. Advantageously, in this way the damping of the vibrating motions would be controlled in a "smart" fashion, that is to say, modulating the intervention of the stop unit 105 as a function of the extent of the vibration, which is feasible thanks to the proportional nature of the hydraulic control.

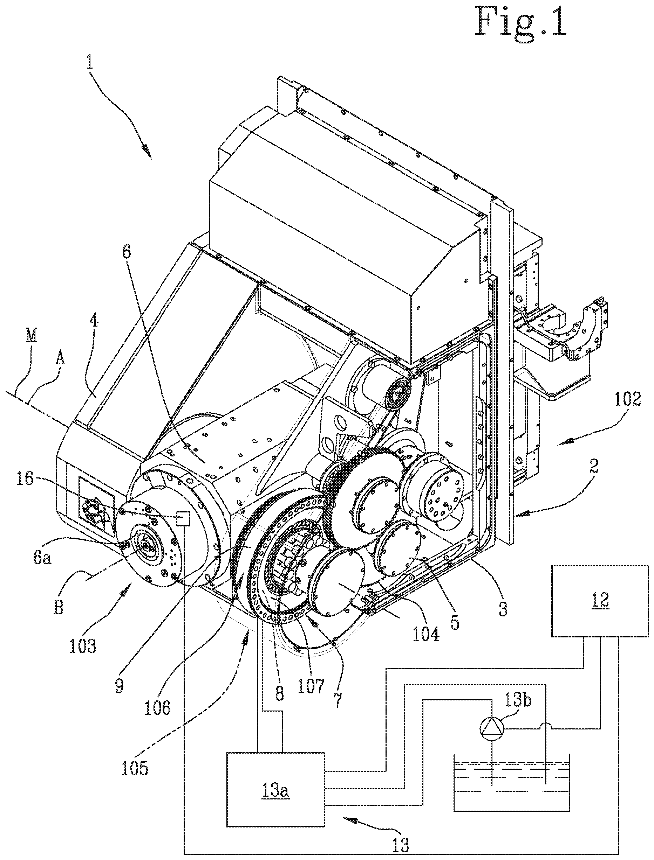

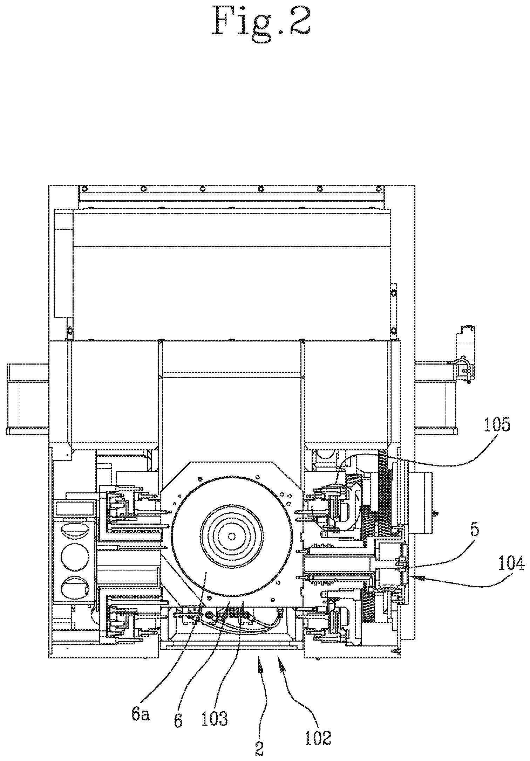

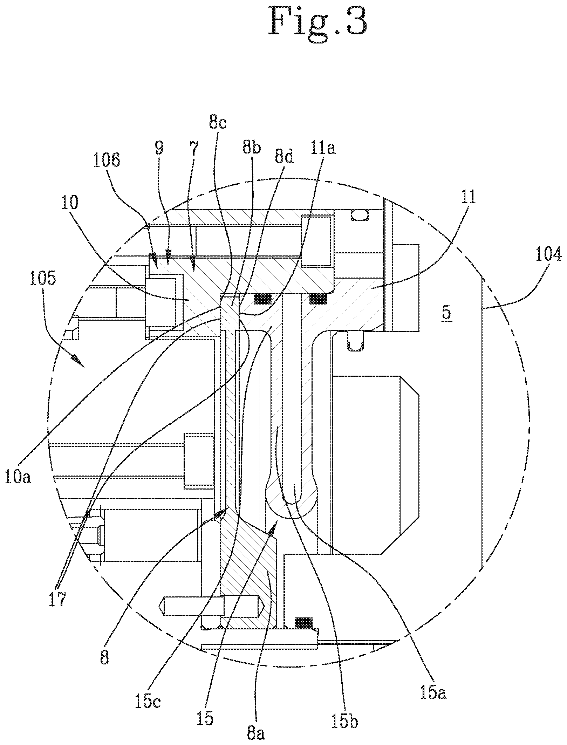

A description is given below, with reference to Figures 1 to 3, of a first embodiment of the movement system 1 according to this invention. According to this embodiment, the movement system 1 comprises a rotatable member, defining the movable member 103, rotatably associated with a fixed member, defining the frame 102.

The rotatable member is rotating about an axis of rotation (or axis of oscillation).

Preferably, as illustrated, in this embodiment the fixed member (or frame 102) is defined by a spindle-mounting head 2 to which is rotatably associated a tool-holder spindle 6, defining the rotating member (or movable member 103).

The spindle 6 can vary its orientation relative to the axis of rotation (or axis of oscillation "A") which is typically, but not exclusively, horizontal.

The spindle-mounting head 2, comprises a base portion 5 from which extends at least a arm 3, protruding to a relative end portion 3a.

The arm 3 extends from the base portion 5 of the supporting body 2 away from it.

The spindle 6 is rotatably connected to the arm 3, preferably at the end portion 3a, in such a way as to rotate about an axis of oscillation "A" (or tilt axis).

In this case, the movement axis "M" is an axis of oscillation "A" about which the spindle 6, or movable member 103, rotates.

In the preferred embodiment, the axis of oscillation "A" is substantially horizontal.

Preferably, a first 3 and a second arm 4 protruding from a base portion 5 and defining a forked structure wherein the spindle 6 is rotatably located.

Thus, the two arms 3, 4 are substantially parallel to and facing each other. In turn, the spindle 6 comprises a tool-mounting body 6a rotatable about its own machining axis "B" at right angles to the axis of oscillation "A". In other words, the tool-mounting body 6a is configured to rotate about itself. In this regard, it should be noted that the spindle-mounting head 2 comprises a motion transmission unit 5 operatively associated with the tool-mounting body 6a to put it in rotation about its own machining axis "B". The transmission unit 5 is configured to vary the orientation of the spindle 6 in space as a function of the type of machining to be performed on the part.

The transmission unit 5 is operatively interposed between the first arm 3 or second arm 4 and the spindle 6.

The transmission unit 5 is not discussed in detail, because it is of a per se known type and not part of this invention.

In this embodiment, the stop unit 105 preferably has the structure of a brake disc 7.

The structure in the form of a brake disc 7 can be associated with a generic rotatable body as described above; however, for simplicity of description, but without limiting the scope of the invention, express reference is made to the spindle unit/spindle-mounting head illustrated in Figures 1 to 3.

The stop unit 105 comprises at least a disc 8 and a gripper 9, the latter preferably driven by means of the above-mentioned hydraulic circuit 13. Preferably, the disc 8 is rotatable, rigidly connected to the spindle 6 so as to rotate with it, whilst the gripper 9 is connected to the frame 2.

The disc 8 corresponds to the above-mentioned second element 107 (anchored to the spindle 6) whilst the gripper 9 corresponds to the above-mentioned first element 106 of the stop unit 105.

Alternatively, although it is to be considered a less attractive solution, the disc could be fixed and associated with the frame 2.

The hydraulic actuation circuit 13 is configured to move the gripper 9 towards and/or away from the disc 8 as a function of a command issued by the control unit 12.

The disc 8 is a circular element equipped with a central portion 8a anchored to the spindle 6 and an operational peripheral portion 8b.

The peripheral portion 8b has a first 8c and a second face 8d which are oriented away from each other, each made in such a way as to be able to be coupled with the gripper 9, or a part of it.

In the preferred embodiment, the disc is made of C50 UNI 7845/79.

The gripper 9 is provided with at least a first 10 and a second 11 braking body which are facing each other and spaced from each other.

Between the first 10 and the second 11 braking body is interposed (rotatably) the disc 8, in particular the peripheral portion 8b of the disc 8. The first braking body 10 faces the first face 8c of the peripheral portion 8b of the disc 8.

The second braking body 11 faces the second face 8d of the peripheral portion 8b of the disc 8.

At least one of the braking bodies 10, 11 is movable towards and away from the disc 8, in particular from the peripheral portion 8b, between an active position, wherein it exerts a predetermined pressure on the disc 8, and a standby position, in which it does not press on the disc 8.

The contact surfaces 10a, 11a come into contact in use with the peripheral portion 8b of the disc, respectively, with the first 8c and the second face 8d.

It should be noted that the braking bodies 10, 11 may be both movable or, as in the embodiment illustrated, divided into a pressing body 11 and a contact body 10.

The structure with a single pressing body 11 makes it possible to reduce the costs while maintaining good performance levels.

In effect, in use the pressing body 11 is moved and pressed against the peripheral portion 8b of the disc 8 (more specifically, the second face 8d), deforms towards the contact body 10.

More specifically, the deforming (elastic) is such as to abut the peripheral portion 8b of the disc 8 (more specifically, the first face 8c) against the contact surface 10a of the contact body 10.

Preferably, the pressing body 11 comprises a deformable element 15 put in fluid communication with the hydraulic actuation circuit 13 and facing the disc 8.

The deformable element 15 faces the second face of the peripheral portion 8b of the disc 8, whilst the contact body 10 is positioned on the side opposite to it, thus the contact element 10 faces the first face of the peripheral portion 8b of the disc 8.

Preferably, the deformable element 15 comprises a chamber 15a for receiving an operating fluid of the hydraulic actuation circuit 13; the chamber 15a is delimited by at least one deformable wall 15b having outside the chamber 15a an active portion 15c designed to come into contact with the disc 8 with the increase in the hydraulic pressure in the circuit.

It should be noted that, preferably, at least one of the two braking bodies 10, 11 of the gripper 9 has at least one contact surface 10a, 11a with the disc 8 equipped with the coating 17 already described above. Advantageously, the presence of the coating 17 facilitates the sliding of the disc 8 in the first configuration, thereby preventing the direct metal-metal friction which would result in a rapid wear of the stop unit and/or excessive overheating of the head 1.

Preferably, the coating 17 is positioned on the pressing body 11, more preferably on the active portion 15c of the deformable wall 15b of the deformable element 15 (which defines the contact surface 11a).

Alternatively, or in addition, the coating could also be provided on the contact surface 10a of the contact element 10.

For moving the gripper 9, the control unit 12 selectively controls the hydraulic actuation circuit 13 in the first configuration, for damping, or in the second configuration, for stopping.

As already generically described above, in the first configuration the circuit 13 generates a first pressure P1 which exerts a first clamping force of the gripper 9 (in particular of the pressing body 11) on the disc 8.

In the second configuration, the circuit 13 generates a second pressure P2 which exerts a second clamping force of the gripper 9 on the disc 8.

In this embodiment, the second pressure P2 is between 25 and 45 bar, preferably approximately 35 bar.

The first pressure P1 is, on the other hand, preferably between 4 and 8 bar, more preferably between approximately 5 and 6 bar.

Also in terms of controlling, the correlation between the control unit 12 and the valve 13a (and, if necessary, the sensor 16) is similar to that described above.

In effect, the control unit 12 is configured for sending to the valve 13a:
a signal representing the second position when the numerical control or
the operator wants to stop the movement of the spindle 6 about the axis of oscillation "A",
a signal representing the third position when the numerical control or the operator wants to activate the movement of the spindle 6 about the axis of oscillation "A".

The signal representing the first position is sent to the valve, from the control or by the operator, when the movement of the spindle 6 about the axis of oscillation "M" is performed inside a machining which causes a vibrating motion (that is to say, a vibration) in the tool.

In some embodiments, this control may be preset (or imparted manually by the operator) as a function of the type of machining to be performed, or there may be a sensor in the ways described above.

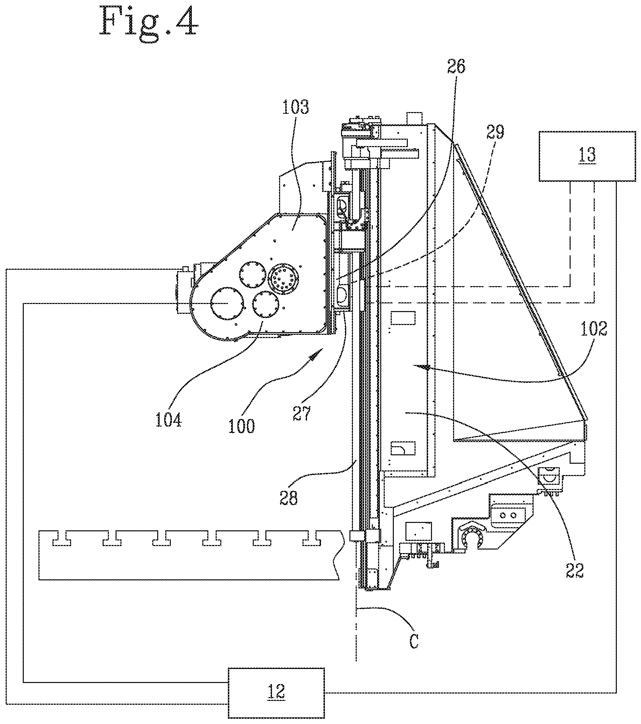

On the other hand, Figure 4 schematically illustrates a system for linear movement of a carriage 26 relative to the frame 22.

In this embodiment, the movable member 103 is defined by a carriage 26 slidable along a guide 28 extending along the axis of movement "M" by means of a runner 27. In this case, the movement axis "M" is a sliding axis "C".

The transmission unit 104 is defined by a linear drive, with a piston, with gears (or rack) or electrical.

The stop unit 27 is, on the other hand, defined by a brake associated with the pad 27.

The brake comprises a pressing body 29 put in fluid communication with the hydraulic circuit 13 (preferably the same both for the linear and rotary movement) and movable between an active position, in which it presses on the guide, and a passive position.

More preferably, in accordance with this invention, there are two active conditions, corresponding to the first and the second configuration of the hydraulic circuit 13 described above.

Alternatively, the linear movement could have a dedicated hydraulic circuit, identified with the numeral 13 for simplicity of description.

In this case, too, the control unit 12 is configured for sending to the valve 13a:
a signal representing the second position when the numerical control or
the operator wants to stop the movement of the carriage 26 along the guide 28;
a signal representing the third position when the numerical control or the operator wants to activate the movement of the carriage 26 along the guide 28.

The signal representing the first position is sent to the valve, from the control or by the operator, when the movement of the carriage 26 along the guide 28 is performed inside a machining which causes a vibrating motion (that is to say, a vibration) in the tool.

In some embodiments, this control may be preset (or imparted manually by the operator) as a function of the type of machining to be performed, or there may be a sensor in the ways described above.

The invention achieves the above mentioned aims and brings important advantages.

In effect, the presence of a movement system which is able not only to guarantee the locking of the movable member and the frame, but also to independently reduce the vibrations occurring in the tool without using additional control elements allows both the prior art machines to be easily adapted and new machines to be produced with high levels of performance and with reduced costs.

Moreover, the use of a layer for coating the contact surfaces allows the mechanical structure of the machine to be left substantially unchanged, operating directly only on the hydraulic braking circuit.

## Claims

1. A system for moving a tool in a machine tool, comprising:
a frame (102);
a member (103) movable relative to the frame along or about an axis of movement (M);
a unit (104) for transmission of the rotational motion operatively interposed between the frame (102) and the movable member (103);
a hydraulic stop unit (105) operatively interposed between the frame (102) and the movable member (103);
a control unit (12) associated with the transmission unit (104) and the stop unit (105) for controlling them;
wherein the stop unit (105) comprises:
at least a first element (106) rigidly connected to the frame (102) and at least a second element (107) rigidly connected to the movable member (103),
a hydraulic actuation circuit (13) associated with the first (106) or the second element (107) and configured for moving the first element (106) towards and/or away from the second element (107), or vice versa, according to a command issued by the control unit (12),
and wherein the control unit (12) is configured for selectively controlling the hydraulic actuation circuit (13) at a first pressure (P1), in which it generates a first contact force between the first (106) and the second element (107), or at a second pressure (P2), in which it generates a second contact force between the first (106) and the second element (107), greater than the first pressure (P1); the second pressure (P2) being sufficient to stop the movement of the second element /107) with respect to the first element (106),
**characterised in that** it comprises at least one vibration sensor (16) designed to detect any vibrating motions of the tool and designed to send to the control unit (12) a signal representing the vibrating motions; the control unit (12) being:
associated with the sensor (16) for receiving the signal;
configured for controlling the hydraulic actuation circuit (13) in such a way as to bring it to the first pressure (P1), defining the first configuration.

2. The movement system according to claim 1, **characterised in that** the second pressure (P2) is at least three times the first pressure (P1).

3. The movement system according to claim 1 or 2, **characterised in that** the second pressure (P2) is between 25 and 45 bar, whilst the first pressure (P1) is between 4 and 8 bar.

4. The movement system according to any one of the preceding claims, **characterised in that** at least one of the elements (106, 107) of the stop unit (105) has at least one surface of contact with the other element provided with a coating (17) of material having a low coefficient of friction.

5. The movement system according to claim 4, **characterised in that** the coating (17) has a coefficient of friction relative to the non-lubricated steel of less than 0.6, preferably equal to approximately 0.4.

6. The movement system according to claim 4 or 5, **characterised in that** the coating (17) has a thickness of less than 10 µm, preferably less than or equal to 6 µm.

7. The movement system according to any of claims 4 to 6, **characterised in that** the coating (17) has a hardness of between 2,000 and 3,000 HV, preferably between 2,400 and 2,700 HV.

8. The movement system according to any one of the preceding claims, **characterised in that** the frame (102) and the movable member (103) are defined by a fixed member and by a member which can rotate about an axis of rotation or oscillation (A) corresponding to the axis of movement (M), wherein the first (106) and second element (107) of the stop unit (105) being formed by at least one rotatable disc (8), rigidly connected to the rotatable member to rotate with it, and by a gripper (9) associated with the disc (8); the hydraulic actuation circuit (13) being associated with the gripper (9) and configured to move at least in part the gripper (9) towards and/or away from the disc (9) as a function of a command issued by the control unit (12).

9. The movement system according to claim 8, **characterised in that** the fixed member and the rotatable member are defined by a the spindle-mounting head (2) and by a tool-holder spindle (6); the spindle (6) being rotatably connected to the head (2), for rotating about a predetermined axis of oscillation (A),

10. The movement system according to claim 9, **characterised in that** the gripper (9) comprises at least a first (10) and a second (11) braking body which are facing each other, between which the disc (8) is interposed; the first (10) and/or the second (11) braking body having at least one surface (10a, 11a) of contact with the disc (8) provided with a coating (17) of material having a low friction coefficient to favour the sliding of the disc (8) in the first configuration.

11. The movement system according to claim 9 or 10, **characterised in that** the disc comprises a central portion (8a) anchored to the spindle (6) and a peripheral portion (8b) having a first (8c) and a second (8d) face, facing, respectively, the first (10) and the second (11) braking body; the first (8c) and/or the second (8d) face being provided with a coating (17) of material having a low friction coefficient to favour the sliding of the disc (8) in the first configuration.

12. The movement system according to claim 10 or 11, **characterised in that** the contact surfaces (10a, 11a) of the first (10) and the second (11) braking body and the first (8c) and second face (8d) of the peripheral portion (8b) of the disc (8) are equipped provided with the coating (17).

13. The movement system according to any one of claims 9 to 12, **characterised in that** the gripper (9) comprises a pressing body (11) equipped with a deformable element (15) put in fluid communication with the hydraulic actuation circuit (13); the deformable element (15) comprising at least one active portion (15c) which can be abutted to the disc (8) at least in the first or second configuration of the circuit (13).

14. The movement system according to claim 13, **characterised in that** the deformable element (15) comprises a chamber (15a) for receiving an operating fluid of the circuit (13) delimited by a deformable wall (15b) provided, outside the chamber (15a), with the active portion (15c).

15. The movement system according to claim 1, **characterised in that** the sensor (16) is configured for measuring an entity of the vibrating motion and for modulating the signal representing the vibrating motion in relation to the entity; the control unit (12) being configured to vary the value of the first pressure (P1) as a function of a value of the signal in order to optimise the damping of the vibrating motion.

## Patentansprüche

1. System zum Bewegen eines Werkzeugs in einer Werkzeugmaschine, umfassend:
einen Rahmen (102);
ein Glied (103), das relativ zu dem Rahmen entlang oder um eine Bewegungsachse (M) bewegbar ist;
eine Einheit (104) zur Übertragung der Drehbewegung, die betriebswirksam zwischen dem Rahmen (102) und dem beweglichen Glied (103) angeordnet ist;
eine hydraulische Stoppeinheit (105), die betriebswirksam zwischen dem Rahmen (102) und dem beweglichen Glied (103) angeordnet ist;
eine Steuereinheit (12), die mit der Übertragungseinheit (104) und der Stoppeinheit (105) assoziiert ist, um diese zu steuern;
wobei die Stoppeinheit (105) umfasst:
mindestens ein erstes Element (106), das starr mit dem Rahmen (102) verbunden ist, und mindestens ein zweites Element (107), das starr mit dem beweglichen Glied (103) verbunden ist,
eine hydraulische Betätigungsschaltung (13), die mit dem ersten (106) oder dem zweiten Element (107) assoziiert und dazu konfiguriert ist, das erste Element (106) gemäß einem von der Steuereinheit (12) ausgegebenen Befehl auf das zweite Element (107) hin- und/oder von diesem wegführend oder umgekehrt zu bewegen,
und wobei die Steuereinheit (12) zum selektiven Steuern der hydraulischen Betätigungsschaltung (13) bei einem ersten Druck (P1), bei dem sie eine erste Kontaktkraft zwischen dem ersten (106) und dem zweiten Element (107) erzeugt, oder bei einem zweiten Druck (P2), bei dem sie eine zweite Kontaktkraft zwischen dem ersten (106) und dem zweiten Element (107) erzeugt, der größer als der erste Druck (P1) ist, konfiguriert ist; wobei der zweite Druck (P2) ausreichend ist, um die Bewegung des zweiten Elements (107) in Bezug auf das erste Element (106) zu stoppen, **dadurch gekennzeichnet, dass** es mindestens einen Vibrationssensor (16) umfasst, der ausgelegt ist, um alle Vibrationsbewegungen des Werkzeugs zu erfassen und
ausgelegt ist, um an die Steuereinheit (12) ein Signal zu senden, das die Vibrationsbewegungen darstellt; wobei die Steuereinheit (12):
mit dem Sensor (16) zum Empfangen des Signals assoziiert ist;
konfiguriert ist, um die hydraulische Betätigungsschaltung (13) so zu steuern, dass sie auf den ersten Druck (P1) gebracht wird, wodurch die erste Konfiguration definiert wird.

2. Bewegungssystem nach Anspruch 1, **dadurch gekennzeichnet, dass** der zweite Druck (P2) wenigstens das Dreifache des ersten Druckes (P1) beträgt.

3. Bewegungssystem nach Anspruch 1 oder 2, **dadurch gekennzeichnet, dass** der zweite Druck (P2) zwischen 25 und 45 bar beträgt, während der erste Druck (P1) zwischen 4 und 8 bar beträgt.

4. Bewegungssystem nach einem der vorhergehenden Ansprüche, **dadurch gekennzeichnet, dass** mindestens eines der Elemente (106, 107) der Stoppeinheit (105) mindestens eine Kontaktfläche mit dem anderen Element aufweist, das mit einer Beschichtung (17) aus einem Material mit niedrigem Reibungskoeffizienten versehen ist.

5. Bewegungssystem nach Anspruch 4, **dadurch gekennzeichnet, dass** die Beschichtung (17) einen Reibungskoeffizienten gegenüber dem nicht geschmierten Stahl von weniger als 0,6, vorzugsweise gleich etwa 0,4, aufweist.

6. Bewegungssystem nach Anspruch 4 oder 5, **dadurch gekennzeichnet, dass** die Beschichtung (17) eine Dicke von weniger als 10 µm, vorzugsweise weniger als oder gleich 6 µm aufweist.

7. Bewegungssystem nach einem der Ansprüche 4 bis 6, **dadurch gekennzeichnet, dass** die Beschichtung (17) eine Härte zwischen 2000 und 3000 HV, vorzugsweise zwischen 2400 und 2700 HV aufweist.

8. Bewegungssystem nach einem der vorhergehenden Ansprüche, **dadurch gekennzeichnet, dass** der Rahmen (102) und das bewegliche Glied (103) durch ein feststehendes Glied und durch ein Glied definiert sind, das sich um eine Rotations- oder Oszillationsachse (A) drehen kann, die der Bewegungsachse (M) entspricht, wobei das erste (106) und das zweite Element (107) der Stoppeinheit (105) durch mindestens eine drehbare Scheibe (8), die starr mit dem drehbaren Glied verbunden ist, um sich mit diesem zu drehen, und durch einen Greifer (9) gebildet sind, der mit der Scheibe (8) assoziiert ist; wobei die hydraulische Betätigungsschaltung (13) mit dem Greifer (9) assoziiert ist und konfiguriert ist, um den Greifer (9) in Abhängigkeit von einem von der Steuereinheit (12) ausgegebenen Befehl zumindest teilweise auf die Scheibe (9) hin- und/oder von dieser wegführend zu bewegen.

9. Bewegungssystem nach Anspruch 8, **dadurch gekennzeichnet, dass** das feststehende Glied und das drehbare Glied durch den Spindelmontagekopf (2) und durch eine Werkzeughalterspindel (6) definiert sind; wobei die Spindel (6) drehbar mit dem Kopf (2) verbunden ist, um sich um eine vorbestimmte Oszillationsachse (A) zu drehen.

10. Bewegungssystem nach Anspruch 9, **dadurch gekennzeichnet, dass** der Greifer (9) wenigstens einen ersten (10) und einen zweiten (11) Bremskörper umfasst, die einander zugewandt sind, zwischen denen die Scheibe (8) eingesetzt ist; wobei der erste (10) und/oder der zweite (11) Bremskörper wenigstens eine Kontaktfläche (10a, 11a) mit der Scheibe (8) aufweist/en, die mit einer Beschichtung (17) aus einem Material mit einem niedrigen Reibungskoeffizienten versehen ist, um das Gleiten der Scheibe (8) in der ersten Konfiguration zu begünstigen.

11. Bewegungssystem nach Anspruch 9 oder 10, **dadurch gekennzeichnet, dass** die Scheibe einen mittleren Abschnitt (Sa), der an der Spindel (6) verankert, und einen peripheren Abschnitt (Sb) mit einer ersten (Sc) und einer zweiten (8d) Fläche, die jeweils dem ersten (10) und dem zweiten (11) Bremskörper zugewandt sind, umfasst; wobei die erste (Sc) und/oder die zweite (8d) Fläche mit einer Beschichtung (17) aus einem Material mit einem niedrigen Reibungskoeffizienten versehen sind/ist, um das Gleiten der Scheibe (8) in der ersten Konfiguration zu begünstigen.

12. Bewegungssystem nach Anspruch 10 oder 11, **dadurch gekennzeichnet, dass** die Kontaktflächen (10a, 11a) des ersten (10) und des zweiten (11) Bremskörpers und die erste (Sc) und die zweite Fläche (8d) des peripheren Abschnittes (Sb) der Scheibe (8) mit der Beschichtung (17) versehen sind.

13. Bewegungssystem nach einem der Ansprüche 9 bis 12, **dadurch gekennzeichnet, dass** der Greifer (9) einen Druckkörper (11) umfasst, der mit einem verformbaren Element (15) ausgestattet ist, das in Fluidverbindung mit der hydraulischen Betätigungsschaltung (13) gebracht wird; wobei das verformbare Element (15) mindestens einen aktiven Abschnitt (15c) umfasst, der zumindest in der ersten oder zweiten Konfiguration der Schaltung (13) an der Scheibe (8) anliegen kann.

14. Bewegungssystem nach Anspruch 13, **dadurch gekennzeichnet, dass** das verformbare Element (15) eine Kammer (15a) zum Aufnehmen eines Arbeitsfluids der Schaltung (13) umfasst, abgegrenzt durch eine verformbare Wand (15b), die außerhalb der Kammer (15a) mit dem aktiven Abschnitt (15c) versehen ist.

15. Bewegungssystem nach Anspruch 1, **dadurch gekennzeichnet, dass** der Sensor (16) zum Messen eines Ausmasses der Vibrationsbewegung und zum Modulieren des Signals, das die Vibrationsbewegung in Bezug auf das Ausmaß darstellt, konfiguriert ist; wobei die Steuereinheit (12) konfiguriert ist, um den Wert des ersten Drucks (P1) als eine Funktion eines Werts des Signals zu variieren, um die Dämpfung der Vibrationsbewegung zu optimieren.

## Revendications

1. Système destiné à déplacer un outil dans une machine-outil, comprenant :
un cadre (102) ;
un élément (103) mobile par rapport au cadre le long ou autour d'un axe de déplacement (M) ;
une unité (104) de transmission du mouvement de rotation interposée de manière opérationnelle entre le cadre (102) et l'élément mobile (103) ;
une unité d'arrêt hydraulique (105) interposée de manière opérationnelle entre le cadre (102) et l'élément mobile (103) ;
une unité de commande (12) associée à l'unité de transmission (104) et à l'unité d'arrêt (105) pour les commander ;
dans lequel l'unité d'arrêt (105) comprend :
au moins un premier élément (106) rigidement relié au cadre (102) et au moins un second élément (107) rigidement relié à l'élément mobile (103),
un circuit d'actionnement hydraulique (13) associé au premier (106) ou au second élément (107) et configuré pour rapprocher et/ou éloigner le premier élément (106) du second élément (107), ou inversement, en fonction d'une commande émise par l'unité de commande (12),
et dans lequel l'unité de commande (12) est configurée pour commander sélectivement le circuit d'actionnement hydraulique (13) à une première pression (P1), dans laquelle elle génère une première force de contact entre le premier (106) et le second élément (107), ou à une seconde pression (P2), dans laquelle elle génère une seconde force de contact entre le premier (106) et le second élément (107), supérieure à la première pression (P1) ; la seconde pression (P2) étant suffisante pour arrêter le mouvement du second élément (107) par rapport au premier élément (106),
**caractérisé en ce qu'**il comprend au moins un capteur de vibrations (16) conçu pour détecter tout mouvement vibratoire de l'outil et pour envoyer à l'unité de commande (12) un signal représentant les mouvements vibratoires ; l'unité de commande (12) étant :
associée au capteur (16) pour recevoir le signal ;
configuré pour commander le circuit d'actionnement hydraulique (13) de manière à l'amener à la première pression (P1), définissant la première configuration.

2. Système de déplacement selon la revendication 1, **caractérisé en ce que** la seconde pression (P2) est au moins trois fois supérieure à la première pression (P1).

3. Système de déplacement selon la revendication 1 ou 2, **caractérisé en ce que** la seconde pression (P2) est comprise entre 25 et 45 bars, tandis que la première pression (P1) est comprise entre 4 et 8 bars.

4. Système de déplacement selon l'une quelconque des revendications précédentes, **caractérisé en ce qu'**au moins un des éléments (106, 107) de l'unité d'arrêt(105) a au moins une surface de contact avec l'autre élément pourvue d'un revêtement (17) en matériau ayant un faible coefficient de frottement.

5. Système de déplacement selon la revendication 4, **caractérisé en ce que** le revêtement (17) a un coefficient de frottement par rapport à l'acier non lubrifié inférieur à 0,6, de préférence égal à environ 0,4.

6. Système de déplacement selon la revendication 4 ou 5, **caractérisé en ce que** le revêtement (17) a une épaisseur inférieure à 10 µm, de préférence inférieure ou égale à 6 µm.

7. Système de déplacement selon l'une quelconque des revendications 4 à 6, **caractérisé en ce que** le revêtement (17) a une dureté comprise entre 2 000 et 3 000 HV, de préférence entre 2 400 et 2 700 HV.

8. Système de déplacement selon l'une quelconque des revendications précédentes, **caractérisé en ce que** le cadre (102) et l'élément mobile (103) sont définis par un élément fixe et par un élément pouvant tourner autour d'un axe de rotation ou d'oscillation (A) correspondant à l'axe de déplacement (M), le premier (106) et le second élément (107) de l'unité d'arrêt (105) étant formés par au moins un disque rotatif (8), relié rigidement à l'élément rotatif pour tourner avec lui, et par une pince (9) associée au disque (8) ; le circuit d'actionnement hydraulique (13) étant associé à la pince (9) et configuré pour rapprocher et/ou éloigner au moins en partie la pince (9) du disque (9) en fonction d'une commande émise par l'unité de commande (12).

9. Système de déplacement selon la revendication 8, **caractérisé en ce que** l'élément fixe et l'élément rotatif sont définis par une tête de montage de broche (2) et par une broche de porte-outil (6) ; la broche (6) étant reliée de manière rotative à la tête (2), pour tourner autour d'un axe d'oscillation prédéterminé (A).

10. Système de déplacement selon la revendication 9, **caractérisé en ce que** la pince (9) comprend au moins un premier (10) et un second (11) corps de freinage qui se font face, entre lesquels le disque (8) est interposé ; le premier (10) et/ou le second (11) corps de freinage ayant au moins une surface (10a, 11a) de contact avec le disque (8) pourvue d'un revêtement (17) en matériau ayant un faible coefficient de frottement pour favoriser le glissement du disque (8) dans la première configuration.

11. Système de déplacement selon la revendication 9 ou 10, **caractérisé en ce que** le disque comprend une partie centrale (Sa) ancrée à la broche (6) et une partie périphérique (Sb) ayant une première (Sc) et une seconde (8d) face, faisant respectivement face, au premier (10) et au second (11) corps de freinage ; la première (Sc) et/ou la seconde (8d) face étant pourvue d'un revêtement (17) en matériau ayant un faible coefficient de frottement pour favoriser le glissement du disque (8) dans la première configuration.

12. Système de déplacement selon la revendication 10 ou 11, **caractérisé en ce que** les surfaces de contact (10a, 11a) du premier (10) et du second (11) corps de freinage et la première (Sc) et la seconde face (8d) de la partie périphérique (Sb) du disque (8) sont pourvues du revêtement (17).

13. Système de déplacement selon l'une quelconque des revendications 9 à 12, **caractérisé en ce que** la pince (9) comprend un corps de pression (11) équipé d'un élément déformable (15) mis en communication fluidique avec le circuit d'actionnement hydraulique (13) ; l'élément déformable (15) comprenant au moins une partie active (15c) qui peut être en butée contre le disque (8) au moins dans la première ou la seconde configuration du circuit (13) .

14. Système de déplacement selon la revendication 13, **caractérisé en ce que** l'élément déformable (15) comprend une chambre (15a) pour recevoir un fluide de travail du circuit (13) délimitée par une paroi déformable (15b) pourvue, à l'extérieur de la chambre (15a), de la partie active (15c).

15. Système de déplacement selon la revendication 1, **caractérisé en ce que** le capteur (16) est configuré pour mesurer une entité du mouvement vibratoire et pour moduler le signal représentant le mouvement vibratoire en fonction de l'entité ; l'unité de commande (12) étant configurée pour faire varier la valeur de la première pression (P1) en fonction d'une valeur du signal afin d'optimiser l'amortissement du mouvement vibratoire.
